# EUROPEAN PATENT SPECIFICATION

(11) **EP 2 609 706 B1**
(45) Date of publication and mention of the grant of the patent: **25.06.2014**
(21) Application number: 10752644.4
(22) Date of filing: 23.08.2010
(51) Int. Cl.: H04L 1/18, H04B 7/02, H04W 72/04, H04L 1/00, H04L 1/12

(54) **METHOD AND ARRANGEMENT IN A CELLULAR NETWORK FOR FORWARDING ACK OVER THE BACKHAUL LINK AND DIRECTLY TRANSMITTING NACK TO THE DATA SOURCE**
VERFAHREN UND ANORDNUNG IN EINEM MOBILFUNKNETZ FÜR ACK-WEITERLEITUNG ÜBER DIE BACKHAUL-VERBINDUNG UND DIREKTE NACK-ÜBERTRAGUNG ZUR DATENQUELLE
PROCÉDÉ ET SYSTÈME ADAPTÉS, DANS UN RÉSEAU CELLULAIRE, POUR TRANSFÉRER UN ACK SUR LA LIAISON D'ACCÈS RADIO TERRESTRE SANS FIL ET POUR TRANSMETTRE UN NACK DIRECTEMENT À LA SOURCE DE DONNÉES

(43) Date of publication of application: 03.07.2013
(73) Proprietor: Telefonaktiebolaget L M Ericsson (PUBL), 164 83 Stockholm (SE)
(72) Inventor: SIMONSSON, Arne, SE-954 33 Gammelstad (SE); DE BRUIN, Peter, SE-954 31 Gammelstad (SE); HAGERMAN, Bo, SE-135 52 Tyresö (SE); LANDSTRÖM, Sara, SE-974 34 Luleå (SE); TIMUS, Bogdan, SE-163 42 Spånga (SE)
(74) Representative: Kühn, Friedrich Heinrich
(86) International application number: PCT/SE2010/050906
(87) International publication number: WO 2012/026854

(56) References cited:
- EP-A2- 2 012 458
- WO-A1-2005/022798
- US-A1- 2007 047 495
- US-A1- 2009 235 138
- ALCATEL SHANGHAI BELL ET AL: "Relaying for LTE-Advanced", 3GPP DRAFT; R1-084136_RELAYING FOR LTE-ADVANCED_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050317431, [retrieved on 2008-11-05]

## Description

### Technical field

The invention relates to a method and an arrangement in a cellular communication network, in particular to the handling of HARQ (Hybrid Automatic Repeat reQuest) feedback in such networks.

### Background

Heterogeneous networks may comprise a mix of cells of different sizes, using the same radio access technology and the same radio resources. Typically, different downlink power levels result in cells of different sizes. For example, the difference in downlink power between high power macro cells and micro cells with lower downlink power levels could be about 10-20dB. Thus, a number of different nodes operating at different power levels will be deployed in a heterogeneous network, such as eNodeBs, as well as relays and repeaters, of macro, micro, pico, and femto cells. In the uplink, the transmission power is independent of the e.g. eNodeB type and only depends on the UE (User Equipment) power capability. In order to keep down e.g. inter-cell interference and UE power consumption, it has been identified that it would be desirable to enable different cell associations for downlink and uplink transmission for a UE, e.g. at the verge of the area of coverage, i.e. at the cell border, of low power cells. For example, it has been suggested by Docomo in [1] to associate downlink data transmission to a high power cell and uplink data transmission to a low power cell.

However, it is not described in reference [1] how HARQ feedback should be handled during a "double cell association", i.e. when a UE is simultaneously associated or connected to two or more access points, e.g. eNodeBs. Further, the brief suggestions concerning control channels made in [1] appear to be non-optimal with reference to consumed radio transmission resources. Thus, it is identified as a problem how to handle HARQ feedback during double cell association.

Prior art documents discussing this technical field are:

Alcatel Shanghai Bell et al: "Relaying for LTE-Advanced", 3GPP R1 -084136, compares transparent and non transparent relay operations. In case of transparent relay operation, control data (resource allocation and ACK/NACK messages) are transmitted directly in the down-link from the NodeB to the User Equipment, whereas data are forwarded in the up-link from the UE to the EnodeB with the help of the relay.

In WO2005/022798 (Interdigital Tech Corp, 2005), a User Equipment (UE) performs an handover between primary nodeB and non-primary nodeB, controlled by the same RNC. The UE transmits data to the two nodeBs. In case the primary nodeB does not detect errors in the received data, it sends directly an ACK to the UE. Otherwise, it sends an NACK to the RNC and waits for a message from the RNC indicating whether data has been successfully received from the non primary EnodeB before transmitting ACK or NACK.

US2007/047495 (Ji Tingfang et al, 2007) shows a system where a serving base station forwards UL resource assignments to the soft handoff base stations during an handover. Then, the UE transmits up-link data according to these resource assignments and each base station transmits HARQ feedback (ACK, NACK) to the UE.

US2009/235138 (Chang Young-Bin et al, 2009) discloses a method to perform HARQ over a relay system. A source sends data to the relay. The relay starts a timer, set according to the data packet lifetime. The relay forwards the data to the destination. If upon expiry of the timer, the relay has not received any acknowledgement from the destination, it forwards a NACK to the source. Otherwise, an ACK is transmitted. As long as the timer runs, retransmission occurs between the relay and the destination.

EP2012458 (Ind. Tech. Res. Inst., 2009) discloses methods to perform HARQ in a relay system. The relay receives from the source data to forward to the destination. Upon reception of the data, the relay forwards the data to the destination, and starts a relay timer. If the relay timer expires without reception of an ACK or NACK, a simple RACK is forwarded to the source. Otherwise, a RACK with ACK/NACK content is forwarded. The relay timer is set according to round trip time and processing times.

### Summary

It would be desirable to obtain a more optimal HARQ feedback transmission scheme when uplink and downlink of a UE is associated with two different nodes or cells. It is an object of the invention to enable a more efficient transmission of the HARQ feedback when uplink and downlink of UE is associated with different nodes or cells. Further, it is an object of the invention to provide a method and an arrangement for HARQ feedback transmission, which may be used e.g. for providing an improved HARQ performance and a more efficient utilization of resources. These objects may be met by a method and arrangement according to the attached independent claims. Embodiments are defined by the dependent claims.

According to a first aspect, a method is provided in a data receiving node in a cellular communication network further comprising a data transmitting node and an intermediate node, wherein one of the data receiving node and the data transmitting node is a mobile terminal. The method comprises receiving data from the data transmitting node, when the mobile terminal is simultaneously associated with the other two nodes. The method further comprises transmitting any negative acknowledgement, NACK, related to the received data, directly to the data transmitting node, and transmitting any positive acknowledgement, ACK, related to the received data, to the intermediate node for further transfer to the data transmitting node. In other words, ACKs and NACKs may be transmitted to different respective nodes.

According to a second aspect, an arrangement is provided in a data receiving node in a cellular communication network further comprising a data transmitting node and an intermediate node, wherein one of the data receiving node and the data transmitting node is a mobile terminal. The arrangement comprises a functional unit, which is adapted to receive data from a data transmitting node. The arrangement further comprises a functional unit, which is adapted to determine whether the data has been received correctly or not, and further is adapted to decide whether a negative or a positive acknowledgement is to be communicated as feedback regarding units of the received data. The arrangement further comprises a functional unit, which is adapted to transmit any negative acknowledgement, NACK, related to the received data directly to the data transmitting node, and to transmit any positive acknowledgement, ACK, related to the received data, to the intermediate node for further transfer to the data transmitting node. The functional units are adapted to perform these tasks when the mobile terminal is simultaneously associated with the other two nodes.

According to a third aspect, a method is provided in a data transmitting node in a cellular communication network further comprising a data receiving node and an intermediate node, wherein one of the data receiving node and the data transmitting node is a mobile terminal. The method comprises transmitting data to the data receiving node when the mobile terminal is simultaneously associated with the other two nodes. The method further comprises receiving any negative acknowledgement, NACK, related to the transmitted data, directly from the data receiving node, and receiving any positive acknowledgement, ACK, related to the transmitted data, from the intermediate node. In other words, ACKs and NACKs related to the transmitted data may be received from different respective nodes.

According to a forth aspect, an arrangement is provided in a data transmitting node in a cellular communication network further comprising a data transmitting node and an intermediate node, wherein one of the data receiving node and the data transmitting node is a mobile terminal. The arrangement comprises a functional unit, which is adapted to transmit data to a data receiving node. The arrangement further comprises a functional unit, which is adapted to receive any negative acknowledgement, NACK, related to the transmitted data, directly from the data receiving node, and to receive any positive acknowledgement, ACK, related to the transmitted data, from the intermediate node. The functional units are adapted to perform these tasks when the mobile terminal is simultaneously associated with the other two nodes.

The above methods and arrangements may be used for improving then performance of HARQ and/or radio resource utilization when a mobile terminal is in a "dual cell" association. The HARQ performance may be improved, both in uplink and downlink, due to the fast NACK procedure. The radio resource utilization may be improved due to routing the ACK differently from the NACK, in a procedure which involves a slightly longer delay, which utilizes the radio resources more efficiently.

The above method and arrangement may be implemented in different embodiments. In some embodiments the NACK is transmitted with a higher relative robustness than an ACK, e.g. by using a more robust coding or a relatively higher transmission power. This improves the HARQ performance since it gives a more reliable NACK procedure.

In some embodiments, the NACKs are also transmitted to the intermediate node, which gives an even more robust NACK procedure, since the intermediate node then can forward a received NACK to the data transmitting node, and the data transmitting node thus can get redundant NACK information. This could also be achieved by interpreting an absent expected ACK as a NACK in the intermediate node, and sending a NACK to the data transmitting node in case of an absent ACK.

In some embodiments, the data transmitting node can interpret the absence of an ACK as a NACK, and thus continue the transmission process before the possible arrival of a corresponding NACK from the intermediate node.

The embodiments above have mainly been described in terms of a method. However, the description above is also intended to embrace embodiments of the arrangement, adapted to enable the performance of the above described features. The different features of the exemplary embodiments above may be combined in different ways according to need, requirements or preference.

According to yet another aspect, a computer program is provided, which comprises computer readable code means, which when run in one or more processing units, causes any of the arrangements described above to perform the corresponding procedure according to one of the methods described above.

According to yet another aspect, a computer program product is provided, which comprises the computer program of above.

### Brief description of drawings

The invention will now be described in more detail by means of exemplary embodiments and with reference to the accompanying drawings, in which:
Figures 1 and 2 are schematic views illustrating a mobile terminal in dual-cell association.
Figures 3a-b and 4a-b are schematic views and signalling schemes, respectively, illustrating a mobile terminal in dual-cell association where HARQ feedback is routed according to an embodiment.
Figure 5 is a schematic view illustrating a mobile terminal in dual-cell association due to a handover offset, where HARQ feedback is routed according to an embodiment.
Figure 6 is a block diagram overview illustrating the different nodes involved in different embodiments.
Figure 7 is a flow chart illustrating a procedure in a data receiving node, according to an embodiment.
Figure 8 is a schematic view illustrating an arrangement in a data receiving node, according to an embodiment.
Figure 9 is a flow chart illustrating a procedure in a data transmitting node, according to an embodiment.
Figure 10 is a schematic view illustrating an arrangement in a data transmitting node, according to an embodiment.
Figure 11 is a flow chart illustrating a procedure in an intermediate node, according to an embodiment.
Figure 12 is a schematic view illustrating an arrangement in an intermediate node, according to an embodiment.
Figure 13 is a schematic view illustrating an arrangement in a node, according to an embodiment

### Detailed description

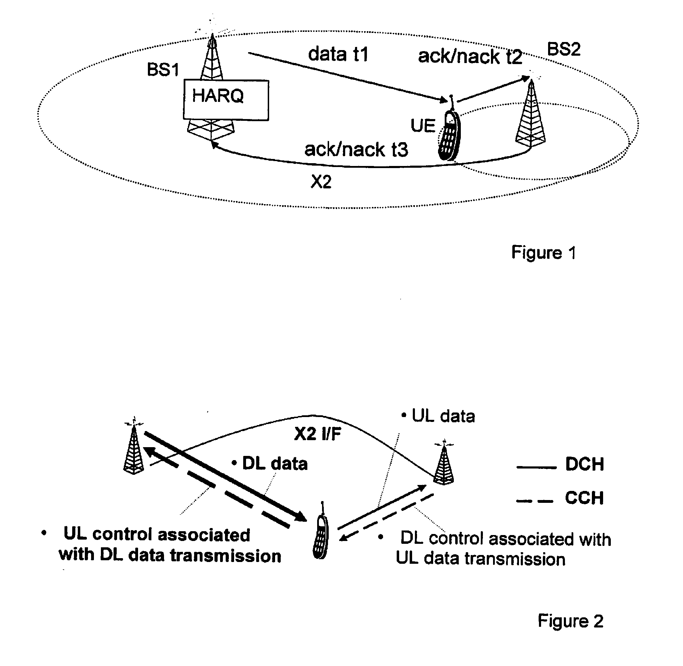

It is realized, that when uplink and downlink data communication from/to a mobile terminal is associated with different respective cells, the feedback control channels may be associated with a node other than the node transmitting on the related data channel, as illustrated in figure 1. When associating e.g. feedback control channels with another node than the node from which related data is received, there will be a significant HARQ feedback delay, due to that the HARQ feedback needs to be forwarded to the data-transmitting node.

To minimize HARQ delay during double-cell association, the feedback control channel could be associated or connected to the same node as the associated data transmission. For example, an uplink control channel could be connected to the same node as a related downlink data transmission and vice versa, as illustrated in figure 2. This type of control channel association is also briefly described in [1], but without the mentioning of HARQ feedback.

However, in LTE, when data is scheduled for transmission, the HARQ feedback is not transmitted on the control or "feedback" channels, but is sent together with data on the shared channels, PUSCH (Physical Uplink Shared CHannel) and PDSCH (Physical Downlink Shared CHannel). Thus, it is realized that, at least for LTE, the problem of significant HARQ feedback delay will not be solved by connecting the feedback control channels to the same node as the associated data transmission, when applying double-cell association.

Further, when associating feedback control channels to the same node as the related data channel during double-cell association, as illustrated in figure 2, the control channel transmission will be non-optimal and cost more radio resources than when being associated with another node, as illustrated in figure 1. Control channels are in many cases a limiting factor and this can then reduce the total capacity.

Briefly described, a solution is provided for enabling an improved HARQ performance, e.g. in heterogeneous networks, by introducing the concept of sending HARQ ACK and NACK to or from different access points, nodes or cells. Within embodiments of the invention, NACK is routed based on minimum delay, while ACK is routed based on minimum radio resource cost. ACK and NACK may be sent with different robustness according to routed radio link hop. NACK may be coded more robustly and/or transmitted with relatively higher power.

Within this disclosure, it is assumed that uplink and downlink from/to a UE can be transmitted to/from different access points, e.g. eNodeBs. It should be noted that this is not possible within the current LTE standard. It has, however, been suggested to and discussed within 3GPP RAN1, see for example reference [1].

The term "associated" used in the context "associated with two cells" or "dual-cell association" implies some type of connection, such that information could be transmitted to or from cells/nodes, with which a mobile terminal is associated.

A "dual-cell association" should typically be used for mobile terminals in a cell border region, e.g. between two cells with different power levels, as described above. The two cells do not necessarily have to differ in power level, it could also be some other parameter that differs, which entails a higher cost in terms of resources when transmitting to one of the cells. During a dual-cell association there will be two associations from the mobile terminal to eNodeBs, and thus two radio hops or links to choose between for transmission. From a radio resource efficiency point of view, for a mobile terminal in a border area, uplink should be transmitted to a low power cell, while downlink should be transmitted from a high power cell.

However, from a HARQ feedback delay point of view, the best would be to send the HARQ feedback directly to the node from which the related data was transmitted, such that the feedback reaches the data transmitting node as fast as possible. When downlink data is sent from a high power node, this would imply that the feedback should be sent to the high power node, and when uplink data is sent to a low power node, the feedback should be sent to the mobile terminal from the low power node, i.e. quite the opposite than when considering what is best from a radio resource efficiency point of view.

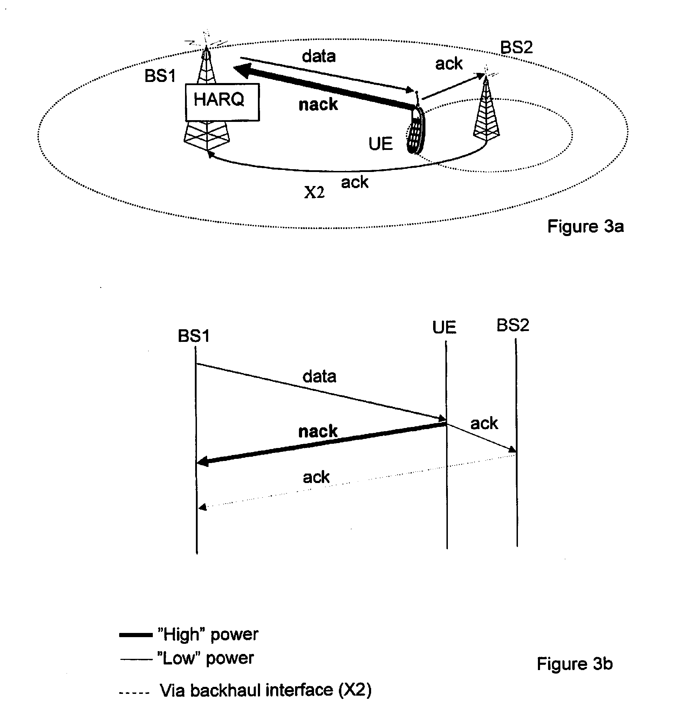

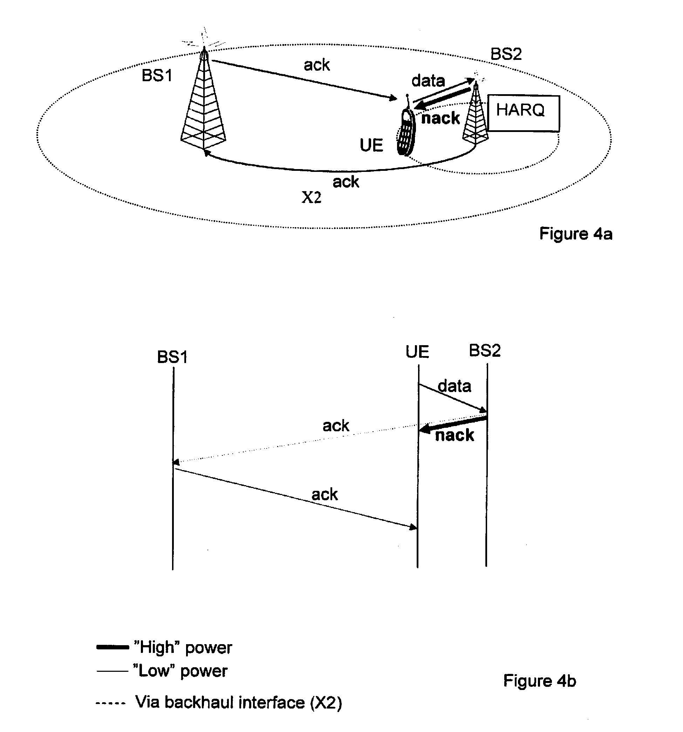

It is realized, that one solution to the problem, taking these conflicting interests into account, would be to select the transmission path differently for HARQ ACK and NACK, respectively, e.g. as follows, which is also illustrated in figures 3 and 4:
1. If HARQ NACK shall be transmitted:
   a. Find shortest delay path, i.e. determine which of the possible transmission paths that would involve the shortest delay when sending the NACK to the node from which the related data was transmitted.
   b. Transmit NACK with high robust transmission format according to estimated radio link quality, e.g. transmit the NACK on the shortest delay path with a high robustness in relation to the robustness of e.g. a "regular" transmission on the shortest delay path.
2. If HARQ ACK shall be transmitted:
   a. Find least costly radio transmission path, i.e. determine which of the possible transmission paths that would involve the minimum utilization of radio resources when sending the ACK to the node from which the related data was transmitted.
   b. Transmit ACK with less robust transmission format according to estimated radio link quality, e.g. transmit the ACK on the path involving the minimum radio resource utilization, with a lower robustness in relation to the robustness of a "regular" transmission on said path, than when sending a NACK on the shortest delay path.

### Example procedure, figure 3

An example LTE downlink embodiment is illustrated in figure 3a. Figure 3b illustrates the signaling scheme for the embodiment illustrated in figure 3a.

The HARQ is said to be located in the data transmitting node, which in this example is the high power macro node.

The macro node, BS1, sends downlink scheduling information on the PDCCH (Physical Downlink Control CHannel) and corresponding data on the PDSCH (Physical Downlink Shared CHannel) to the mobile terminal, UE. The scheduling information may also be sent to the low power micro node, BS2, to inform where to expect ACK on PUCCH (Physical Uplink Control CHannel) from the mobile terminal, UE, which receives the downlink transmission from the macro node. The mobile terminal, UE, tries to decode downlink data information on PDSCH, according to the scheduling information received on the PDCCH.

If data is correctly decoded in the UE, and an ACK is to be transmitted to the associated node involving the minimum utilization of radio resources when sending the ACK to the node from which the related data was transmitted:
a. The transmission power is determined based on the path loss measurement from the low power node, BS2, e.g. according to LTE R8 standard open loop power control.
b. ACK is transmitted on PUCCH from the UE to the low power micro node, BS2, using the determined transmission power.
c. The ACK is sent to the high power macro node, BS1, over backhaul X2 interface by the low power micro node, BS2.

If data is not correctly decoded, and a NACK is to be transmitted to the associated node involving the shortest delay when sending the NACK to the node from which the related data was transmitted:
a. The transmission power is determined based on the path loss measurement from the high power node, BS1, e.g. according to LTE R8 standard open loop power control.
b. NACK is transmitted on PUCCH from the UE to the high power macro node, BS1, using the determined transmission power.

Scheduling information may be forwarded to the micro node, BS2, which then may detect the absence of an ACK, and may in such cases provide a NACK to the macro node, BS1. Further, in order to improve NACK-detection, the micro node, BS2, may also be set to receive any NACK transmitted from the mobile terminal, and forward received NACKs to the macro node, BS1. That is, in both these cases, i.e. when detecting the absence of an ACK or when receiving a NACK, the micro node, BS2, could send a NACK over the backhaul X2 to the macro node, BS1, and thus provide extra information to the macro node, BS1.

### Example procedure, figure 4

An example LTE uplink embodiment is illustrated in figure 4a. Figure 4b illustrates the signaling scheme for the embodiment illustrated in figure 4a. In this embodiment, the HARQ is located in the low power micro node, BS2.
1. The micro node, BS2, sends uplink scheduling information to the mobile teminal, UE, on PDCCH.
2. The mobile terminal, UE, transmits data on the scheduled PUSCH resource blocks to the micro node, BS2.
3. If data is correctly decoded by the micro node, BS2:
   ■ The ACK is sent to the macro node, BS1, over backhaul X2 interface.
   ■ The PHICH (Physical Hybrid ARQ Indicator Channel) coding rate is determined according to radio link from the macro cell, BS1, to the UE.
   ■ ACK is transmitted on PHICH from the macro node, BS1, to the UE.
4. If data is not correctly decoded:
   ■ The PHICH coding rate is determined according to radio link from the micro cell, BS2, to the UE.
   ■ NACK is transmitted on PHICH from the micro node, BS2, to the UE.

### Round trip time

The round trip time for ACK in the embodiments above will be longer than for NACK, due to the detour over a second access point, i.e. an intermediate node. There are two possible ways to handle this.
a) The HARQ can operate on minimum round trip time (with both embodiments above), assuming "ACK" if no NACK is received within a certain time interval. The UE may also flush the HARQ buffer if no retransmission is received when expected. The amount of NACK is typically much lower than the amount of ACK, typically in the order of 10%, and an additional margin and more resources can be spent on NACK transmissions in order to achieve a very low non-detected NACK ratio. In case of no NACK and no delayed ACK relayed from the low power node, one of the two following solutions could be selected:
   I. initiate a full restarted HARQ retransmission.
   II. initiate an RLC or other higher layer retransmission.
b) A more dynamic HARQ retransmission with non-fixed retransmission round-trip time could be applied.

If the intermediate node sends NACK in case of not detected ACK, the methods according to a) I and II can also be applied. The same yields for if the intermediate node forwards NACK and the NACK was not originally detected by the data transmitting node.

Further, in a receiver of HARQ ACK/NACK, the decoding threshold could be biased to NACK. The reason for such a bias would be that a failure to decode an ACK, resulting in a decoded NACK, only entails an unnecessary HARQ retransmission, while a NACK being decoded as an ACK may entail an RLC retransmission. The latter costs more transmission resources and also increases the packet data transmission delay significantly and thereby degrades the user quality.

The described embodiments for LTE above are for ACK/NACK transmission on the dedicated control channels PUCCH and PHICH. In case of simultaneous data transmission the ACK/NACK is sent along with data on PUSCH and PDSCH, respectively. The same principles can be applied on these channels as well. For the uplink ACK/NACK and downlink ACK it is more in line with the existing control channel structure than what is suggested in [1]. The control and data are sent to/from the same nodes. For downlink data NACK it can be more complicated, but the same problem applies to the outlined suggestion in [1]. Data can be scheduled for transmission to the micro cell at the same time as a NACK is desired to be sent to the macro node. A solution for that can be that the UE only sends the NACK and discards data transmission until it gets a new scheduling. Another solution can be that the NACK is sent along with data but the NACK element is coded more robust so that data is coded aiming at reaching the intermediate node while the NACK is coded aiming at reaching the data transmitting node.

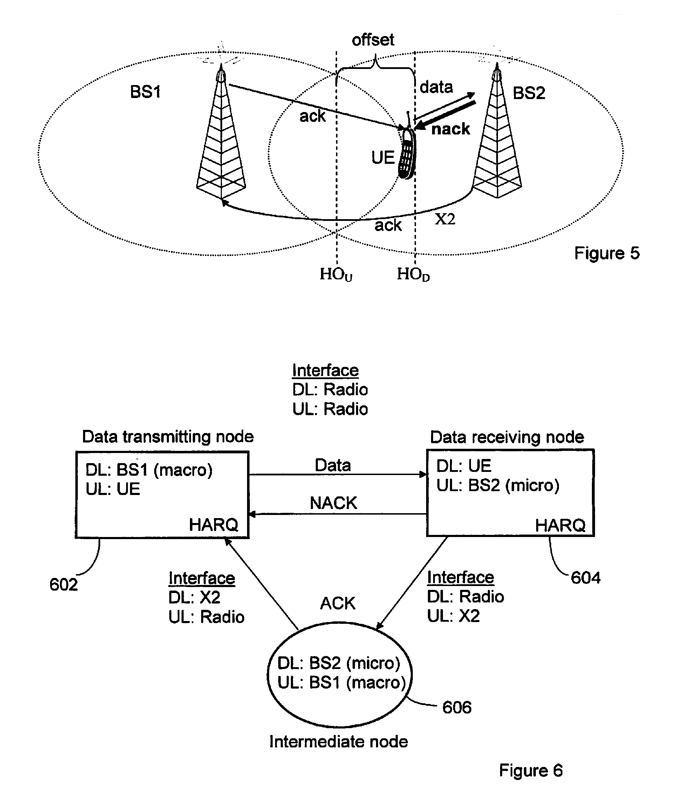

### Example procedure, figure 5

The above described procedure is not only applicable when the nodes simultaneously associated with a mobile terminal have different power capability or settings. The procedure may also be used when an unequal uplink and downlink handover offset is applied. Such an unequal uplink/downlink handover offset is illustrated for uplink data transmission in figure 5, involving two BSs with equal power. In this example, for uplink transmission, a handover between BS1 and BS2 is set to be executed at the boundary HO_{U} (Hand Over _{Uplink}), where the signal strength and path loss are equal for both nodes. However, for downlink transmission, a handover between BS1 and BS2 is set to be executed at the boundary HO_{D} (Hand Over _{Downlink}), which is closer to BS2, as compared to HO_{U}.

The reason for such a difference or offset can be e.g. load sharing. For example, the downlink in BS2 may be overloaded, and therefore unequal handover offsets may be applied to share some downlink load to BS1. The use of different handover offsets for uplink and downlink results in the same uplink downlink cell allocation difference as in the case where the base stations have different power levels. Thus, systems applying unequal handover offsets for uplink and downlink, e.g. as illustrated in figure 5, may suffer from the same problem as the previously described heterogeneous networks, and may thus also benefit from embodiments of the invention, e.g. as illustrated in figure 5.

### Overview of involved nodes, figure 6

Below, a number of embodiments in different nodes will be described. The involved nodes are two access points and a mobile terminal, in a situation where the mobile terminal is associated with both access points in a dual-cell association. The roles of the different nodes are i) a data receiving node, ii) a data transmitting node, and iii) an intermediate node. These three nodes and their roles in the above described procedure are illustrated in figure 6, where it also is exemplified which type of node the respective nodes may represent in downlink, DL, and uplink, UL, data transmission scenarios, respectively. The interfaces between the nodes are also exemplified in figure 6. The DL scenario corresponds to a scenario like the one illustrated in figure 3a-b, and the UL scenario corresponds to a scenario like the one illustrated in figure 4a-b.

The data transmitting node 602, could be either an access point, BS1, such as e.g. an eNodeB, or a mobile terminal, UE, depending on whether it is a downlink, DL, or an uplink, UL, data transmission scenario. In a heterogeneous network comprising high power macro cells and low power micro cells, the DL scenario access point, BS1, would typically be of a macro cell. The data transmitting node 602 sends data to the data receiving node 604, and receives any negative HARQ feedback related to the transmitted data from the data receiving node 604, and any positive HARQ feedback related to the transmitted data from the intermediate node 606.

The data receiving node 604 could be either a mobile terminal, UE, or an access point, BS2, such as an eNodeB, depending on whether it is a DL or an UL data transmission scenario. In a heterogeneous network comprising macro and micro cells, the UL scenario access point, BS2, would typically be of a micro cell. The data receiving node 604 receives data transmitted from the data transmitting node 602, and sends any negative HARQ feedback related to the received data directly to the data transmitting node 602, and sends any positive HARQ feedback to the intermediate node 606, for further transfer to the data transmitting node 602.

The intermediate node 606 is an access point, BS1 or BS2, such as an eNodeB. The intermediate node 606 is the one of the access points involved, BS1, BS2, which represents "the lower cost" in terms of consumed radio resources when transmitting HARQ feedback. For example, in a heterogeneous network comprising macro and micro cells, the intermediate node 606 would be an access point, BS2, of a low power micro cell in a DL data transmission scenario, and an access point, BS1, of a high power macro cell in an UL data transmission scenario.

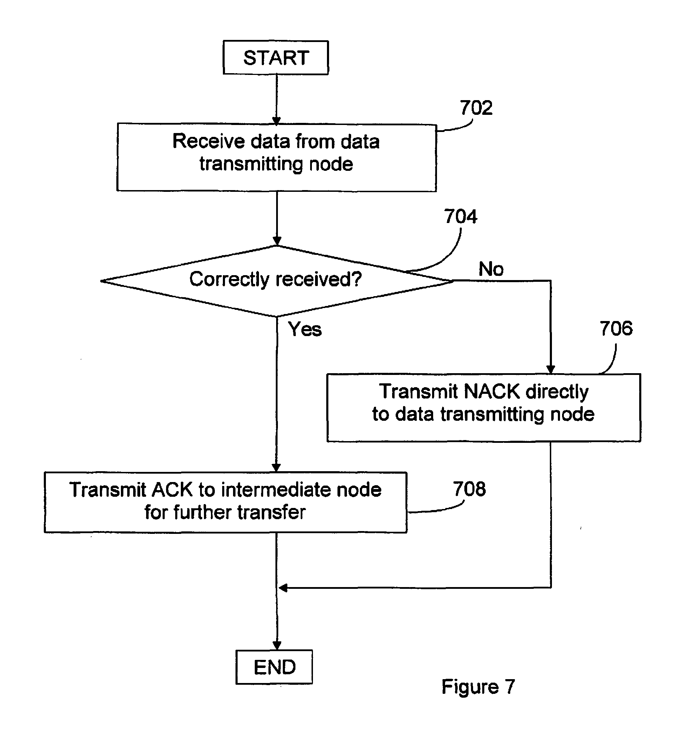

### Example procedure, figure 7

Below, a more general example procedure in a data receiving node in a cellular communication network, further comprising a data transmitting node and an intermediate node, will be described with reference to figure 7. The data receiving node could be a mobile terminal or an access point, such as an eNodeB. Initially, data from a data transmitting node is received in a first action 702. When the data receiving node is a mobile terminal, the data transmitting node will be a first access point, and when the data receiving node is an access point, the data transmitting node will be a mobile terminal. In the case when the data receiving node is a mobile terminal, the downlink control channel (PDCCH) is first decoded to check if there is any scheduled data for the data receiving node and in that case where in the data channel (PDSCH).

In the case when the data receiving node is an eNodeB, the eNodeB has scheduled the data transmitting mobile terminals including where in the data channels each terminal should send, and thereby know where to expect data transmission. In a next action 704, it is determined if the data has been received correctly, e.g. according to a standard HARQ procedure. If the data has been received correctly, an ACK is sent, in an action 708, to an intermediate node for further transfer to the data transmitting node. If the data has not been received correctly, or has not been correctly completely decoded, which is typically checked with a checksum, a NACK is transmitted directly to the data transmitting node in an action 706. When the data receiving node is a mobile terminal, the intermediate node will be a second access point, and when the data receiving node is an access point, the intermediate node will be another access point, i.e. other than the one in which the procedure is performed.

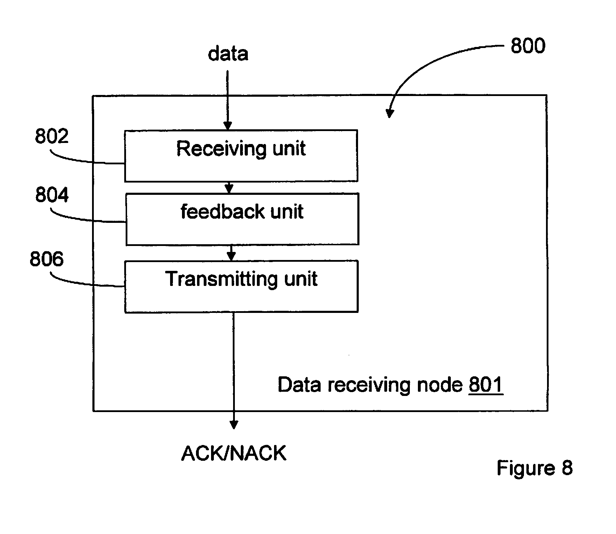

### Example arrangement, figure 8

Below, an exemplary arrangement 800 in a data receiving node, which could be a mobile terminal or an access point, adapted to enable the performance of the above described procedure, will be described with reference to figure 8. The arrangement 800 comprises a receiving unit 802, adapted to receive data from a data transmitting node. When the arrangement is provided in a mobile terminal, the data transmitting node will be a first access point, and when the arrangement is provided in an access point, such as an eNodeB of a micro cell, the data transmitting node will be a mobile terminal. The arrangement 800 further comprises a feedback unit 804, adapted to determine whether the data has been received correctly and whether an ACK or a NACK should be transmitted.

The arrangement 800 further comprises a transmitting unit 806, adapted to transmit ACK and NACK related to the received data to different nodes. The transmitting unit 806 is adapted to transmit a NACK directly to the data transmitting node, and to transmit an ACK to an intermediate node for further transfer to the data transmitting node. The transmitting unit could comprise e.g. one part associated with radio transmission and another part associated with wired transmission over a backhaul interface, such as e.g. a wired X2 interface, or similar. It should be noted that the backhaul or X2 interface could be an air interface. When the data receiving node is a mobile terminal, the intermediate node will be a second access point, and when the data receiving node is an access point, the intermediate node will be another access point, i.e. other than the data receiving access point.

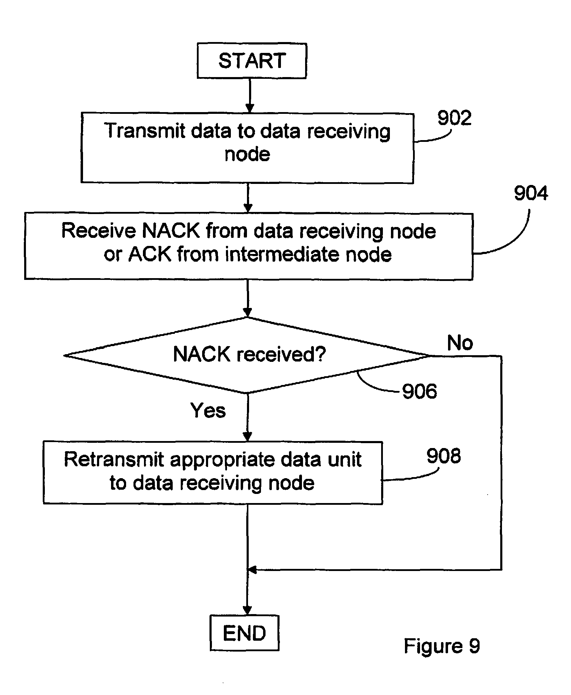

### Example procedure, figure 9

Below, a more general example procedure in a data transmitting node in a cellular communication network further comprising a data receiving node and an intermediate node, will be described with reference to figure 9. The data transmitting node could be an access point, such as an eNodeB, or a mobile terminal. Initially, data is transmitted to a data receiving node in a first action 902. When data has been transmitted and ACK or NACK is expected to be received. Thus, in a next action 904, any negative acknowledgement, NACK, related to the transmitted data, is received directly from the data receiving node; and further, any positive acknowledgement, ACK, related to the transmitted data, is received from an intermediate node. When it is determined, in an action 906, that a NACK is received, the data associated with the NACK is retransmitted to the data receiving node. When it is determined that an ACK is received, the procedure may end or return to an action according to some predefined scheme.

The procedure could also comprise interpreting the absence of a NACK, i.e. that no NACK has arrived, or been received, from the data receiving node within a certain predetermined period of time from the transmission of data, as an ACK, and thus enabling the data transmission process to continue without awaiting an ACK from the intermediate node. When the intermediate node is set to send a NACK in the absence of an expected ACK, and when the intermediate node is set to receive and forward NACKs, NACKs could also be received from the intermediate node. When the data transmitting node is an access point, e.g. an eNodeB, the data receiving node will be a mobile terminal. When the data transmitting node is a mobile terminal, the data receiving node will be an access point.

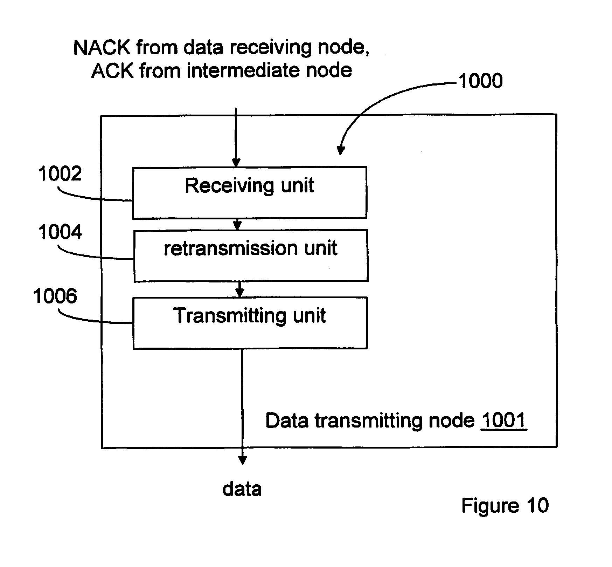

### Example arrangement, figure 10

Below, an exemplary arrangement 1000 in a data transmitting node in a cellular communication network further comprising a data receiving node and an intermediate node, will be described with reference to figure 10, wherein one of the data receiving node and the data transmitting node is a mobile terminal. The data transmitting node could be an access point, e.g. an eNodeB or a mobile terminal, and is adapted to enable the performance of the procedure described in conjunction with figure 9. The arrangement 1000 comprises a transmitting unit 1006, adapted to transmit data to a data receiving node. One of the data transmitting node and the data receiving node is a mobile terminal.

The arrangement further comprises a receiving unit 1002, which is adapted to receive any negative acknowledgement, NACK, related to the transmitted data, directly from the data receiving node; and further, adapted to receive any positive acknowledgement, ACK, related to the transmitted data, from an intermediate node, when the mobile terminal is simultaneously associated with the two other nodes. The receiving unit 1002 could comprise e.g. one part associated with reception over a radio interface, and another part associated with a wire interface, e.g. a wired X2 interface, or similar.

When a NACK is received, the data associated with the NACK may be retransmitted to the data receiving node by a retransmission unit 1004, adapted to attain a retransmission of data related to a received NACK or a detected absence of an expected ACK. The retransmission unit 1004 could also be adapted to interpret the absence of a NACK, i.e. that no NACK has arrived or been received from the data receiving node within a predetermined period of time from the transmission of data, as an ACK, which would enable continuing the data transmission process without awaiting an ACK from the intermediate node.

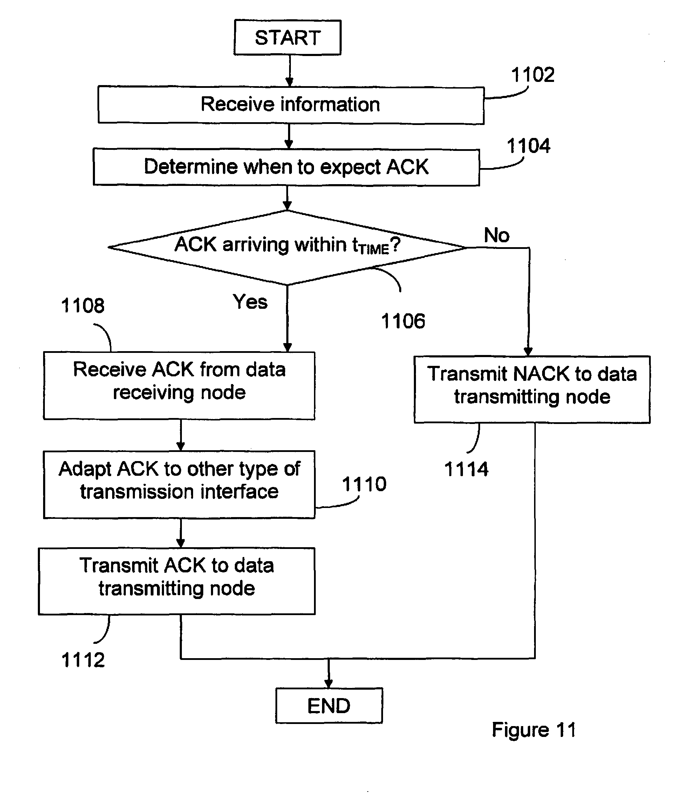

### Example procedure, figure 11

Below, a more general example procedure in an intermediate node in a cellular communication network will be described with reference to figure 11. The communication network further comprises a data transmitting node and a data receiving node. The intermediate node is an access point, such as e.g. an eNodeB. The role of the intermediate node is to forward any ACK from the data receiving node to the data transmitting node. However, the intermediate node should not necessarily forward any NACK from the data receiving node to the data transmitting node, which is a significant difference from regular forwarding functions in intermediate nodes. The intermediate node receives an ACK over one interface and transmits it over another interface, where at least one of the interfaces is an air interface.

An ACK related to data transmitted from the data transmitting node to the data receiving node is received over a first interface from the data receiving node in an action 1108. Typically, the ACK is adapted, e.g. in terms of coding, in order to be transmitted over a second interface to the data transmitting node, in an action 1110. Then, in an action 1112, the ACK is transmitted over the second interface to the data transmitting node. In some embodiments, any NACKs transmitted from the data receiving node to the data transmitting node are not received or forwarded by the intermediate node, only the ACKs.

Further, the intermediate node may be informed of when to expect a possible ACK from the data receiving node. For example, the intermediate node could be provided with the scheduling information concerning the feedback on the transmitted data, which is also provided to the data receiving node. Alternatively the intermediate node could be provided with information related to the scheduling of the data itself. The important characteristic of the information is that it should enable determining or estimating when an ACK, if any, related to certain data transmitted from the data transmitting node, could be expected to arrive from the data receiving node. Information related to data transmitted from the data transmitting node to the data receiving node may be received in an action 1102. Then in an action 1104, it may be determined when an ACK related to the transmitted data could be expected to arrive, if the feedback to said data is an ACK. Then, it may be determined in an action 1106 if an ACK is received within a certain period of time related to the expected time of arrival. In case an ACK is received within the predetermined time, the ACK is forwarded to the data transmitting unit, as described above. In case no ACK is received within the predetermined time, a NACK may be transmitted to the data transmitting node in an action 1114.

Further, the intermediate node could also be set to receive and forward any NACK related to said data, in addition to forwarding any ACK. If neither ACK nor NACK is received within a certain predetermined time period related to an expected time of arrival, a NACK could be transmitted to the data transmitting node

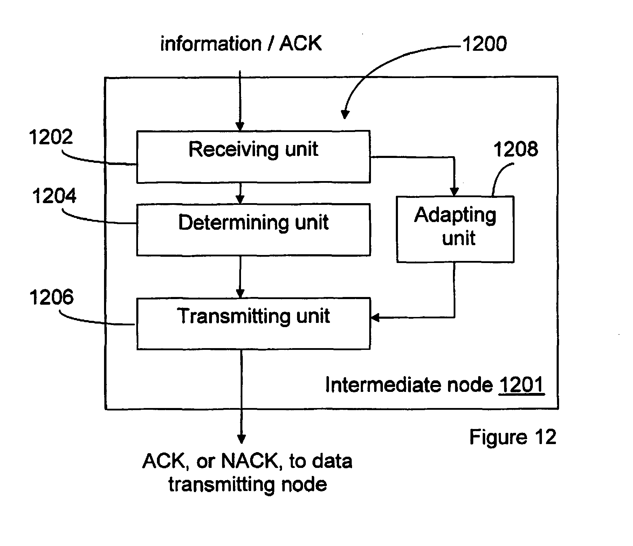

### Example arrangement, figure 12

Below, an exemplary arrangement 1200 in an intermediate node 1201 in a cellular communication network further comprising a data receiving node and a data transmitting node, will be described with reference to figure 12. The arrangement is adapted to enable the performance of the procedure described above in conjunction with figure 11. The arrangement 1200 comprises a receiving unit 1202, which is adapted to receive any ACK related to data transmitted from the data transmitting node to the data receiving node. The arrangement 1200 may further comprise an adapting unit 1208, adapted to adapt a received ACK, e.g. in terms of coding, in order to prepare it for transmission over another interface than the one over which it was received.

The arrangement 1200 further comprises a transmitting unit 1206, adapted to transmit the ACK to the data transmitting node. The receiving unit may further be adapted to receive information related to data transmitted from the data transmitting node to the data receiving node, which information could be used to derive an expected time of arrival of an ACK related to certain transmitted data. Thus, the arrangement 1200 could further comprise a determining unit 1204, adapted to determine when an ACK related to the transmitted data could be expected to arrive. The determining unit 1204 could further be adapted to determine if an ACK has been received within a certain predetermined period of time related to the expected time of arrival of the ACK. In case it is determined that no ACK has been received within the predetermined time period, a NACK may be transmitted to the data transmitting node. The transmitting unit 1206 could further be adapted to transmit a NACK to the data transmitting node when no ACK or NACK is received within the predetermined period of time.

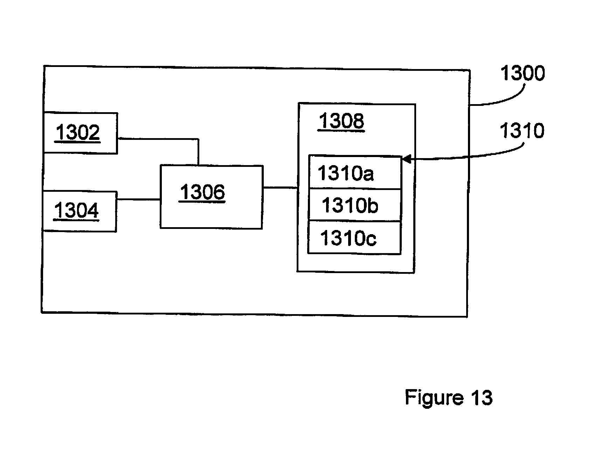

### Example arrangement, figure 13

Figure 13 schematically shows an embodiment of an arrangement 1300 in a data receiving node, which also can be an alternative way of disclosing an embodiment of the arrangement in a data receiving node illustrated in figure 8. Comprised in the arrangement 1300 are here a processing unit 1306, e.g. with a DSP (Digital Signal Processor) and an encoding and a decoding module. The processing unit 1306 can be a single unit or a plurality of units to perform different actions of procedures described herein. The arrangement 1300 also comprises the input unit 1302 for receiving signals from other entities, and the output unit 1304 for output signal(s) to other entities. The input unit 1302 and the output unit 1304 may be arranged as one.

Furthermore the arrangement 1300 comprises at least one computer program product 1308 in the form of a non-volatile memory, e.g. an EEPROM (Electrically Erasable Programmable Read-Only Memory), a flash memory and a disk drive. The computer program product 1308 comprises a computer program 1310, which comprises code means, which when run in the processing unit 1306 in the arrangement 1300 causes the arrangement and/or the data receiving node to perform the actions of the procedures described earlier in conjunction with figure 7.

Hence in the exemplary embodiments described, the code means in the computer program 1310 of the arrangement 1300 comprises a receiving module 1310a for receiving data from a data transmitting node. The computer program may further comprise a feedback module 1310b for determining whether the data has been received and/or decoded correctly, and whether an ACK or a NACK should be fed back to the data transmitting node. The computer program further comprises a transmitting module 1310c, for transmitting any NACK directly to the data transmitting node, and for transmitting any ACK to an intermediate node for further transfer to the data transmitting node. The transmitting module 1310c may e.g. have one part associated with radio transmission, and another part associated with wire transmission.

The computer program 1310 is in the form of computer program code structured in computer program modules. The modules 1310a-c could essentially perform the actions of the flows illustrated in figure 7, to emulate the arrangement in a data receiving node illustrated in figure 8. In other words, when the different modules 1310a-c are run on the processing unit 1306, they correspond to the units 802-806 of figure 8.

Similarly, corresponding alternative to the respective arrangements in a data transmitting node and in an intermediate node, which are illustrated in figures 10 and 12, are possible.

Although the code means in the embodiment disclosed above in conjunction with figure 13 are implemented as computer program modules which when run on the processing unit causes the arrangement and/or data receiving node to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors, instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product comprises a computer readable medium on which the computer program is stored. For example, the computer program product may be a flash memory, a RAM (Random-access memory) ROM (Read-Only Memory) or an EEPROM (Electrically Erasable Programmable ROM), and the computer program modules described above could in alternative embodiments be distributed on different computer program products in the form of memories within the data receiving unit.

Within this document, the given examples mainly comprise a mobile terminal being associated with two different access points, which is believed to be the most likely scenario. However, it is possible that a mobile terminal may be simultaneously associated with more than two access points. The described method is applicable also to such a scenario, since it involves that a NACK is routed based on minimum delay, while ACK is routed based on minimum radio resource cost, and there will be one access point representing a shortest delay and one access point representing a minimum radio resource utilization even when there are more two associated access points.

While the procedure as suggested above has been described with reference to specific embodiments provided as examples, the description is generally only intended to illustrate the inventive concept and should not be taken as limiting the scope of the suggested methods and arrangements, which are defined by the appended claims. While described in general terms, the methods and arrangements may be applicable different types of cellular communication systems, using commonly available communication technologies, such as e.g. GSM/EDGE, WCDMA or LTE, having a hierarchical cell structure or applying unequal handover offsets, in which uplink and downlink transmission from/to a mobile terminal may be associated with different cells.

It is also to be understood that the choice of interacting units, as well as the naming of the units are only for exemplifying purpose, and UEs and network nodes suitable to execute any of the methods described above may be configured in a plurality of alternative ways in order to be able to execute the suggested process actions.

It should also be noted that the units described in this disclosure are to be regarded as logical entities and not with necessity as separate physical entities.

### References

[1] DOCOMO, 3 GPP R1-084253

## Claims

1. A method in a data receiving node in a cellular communication network further comprising a data transmitting node and an intermediate node, wherein one of the data receiving node and the data transmitting node is a mobile terminal, the method comprising:
when the mobile terminal is simultaneously associated with the other two nodes:
- receiving (702) data from the data transmitting node,
- transmitting (706) any negative acknowledgement, NACK, related to the received data, directly to the data transmitting node, and
the method being **characterized by** further comprising:
- transmitting (708) any positive acknowledgement, ACK, related to the received data, to the intermediate node for further transfer to the data transmitting node.

2. The method according to claim 1, wherein a NACK is transmitted with a higher robustness as compared to the robustness when transmitting an ACK.

3. The method according to claim 1 or 2, wherein a NACK is coded more robustly as compared to the robustness of the coding of an ACK.

4. The method according to any of the preceding claims , wherein a NACK is transmitted with a higher power, as compared to the power used when transmitting an ACK

5. The method according to any of the preceding claims, wherein a NACK is routed based on minimum delay while an ACK is routed based on minimum utilization of radio resources.

6. A method in a data transmitting node in a cellular communication network further comprising a data receiving node and an intermediate node, wherein one of the data receiving node and the data transmitting node is a mobile terminal, the method comprising:
when the mobile terminal is simultaneously associated with the other two nodes,
- transmitting (902) data to the data receiving node,
- receiving (904) any negative acknowledgement, NACK, related to the transmitted data, directly from the data receiving node, and
the method being **characterized by** further comprising:
- receiving (904) any positive acknowledgement, ACK, related to the transmitted data, from the intermediate node.

7. The method according to claim 6, wherein an ACK is assumed when no NACK has been received within a first predetermined period of time.

8. The method according to claim 6 or 7, wherein a higher layer retransmission is triggered when an expected ACK has not been received within a second predetermined period of time.

9. An arrangement (800) in a data receiving node (801) in a cellular communication network further comprising a data transmitting node and an intermediate node, wherein one of the data receiving node and the data transmitting node is a mobile terminal, the mobile terminal being simultaneously associated with the other two nodes comprising:
- a receiving unit (802), adapted to receive data from a data transmitting node,
- a feedback unit (804), adapted to determine whether the data has been received correctly or not, and adapted to decide whether a negative or a positive acknowledgement is to be communicated as feedback regarding units of the data, and
- a transmitting unit (806), adapted to transmit any negative acknowledgement, NACK, related to the received data directly to the data transmitting node, and
the arrangement being **characterized by** the transmitting unit being further adapted to transmit any positive acknowledgement, ACK, related to the received data, to the intermediate node for further transfer to the data transmitting node.

10. The arrangement according to claim 9, further adapted to transmit a NACK related to the received data with a higher robustness as compared to the robustness when transmitting an ACK related to the received data.

11. The arrangement according to claim 9 or 10, further adapted to route a NACK based on minimum delay, and to route an ACK based on minimum utilization of control channel resources.

12. An arrangement (1000) in a data transmitting node (1001) in a cellular communication network further comprising a data receiving node and an intermediate node, wherein one of the data receiving node and the data transmitting node is a mobile terminal, the mobile terminal being simultaneously associated with the other two nodes, comprising:
- a transmitting unit (1006), adapted to transmit data to a data receiving node, and
the arrangement being **characterized by** further comprising:
- a receiving unit (1002), adapted to receive any negative acknowledgement, NACK, related to the transmitted data, directly from the data receiving node, and
the arrangement being **characterized by** the receiving unit being further adapted to receive any positive acknowledgement, ACK, related to the transmitted data, from the intermediate node.

13. The arrangement according to claim 12, further adapted to assume an ACK when no NACK is received within a first predetermined period of time.

14. The arrangement according to claim 12 or 13, further adapted to trigger a higher layer retransmission when an expected ACK has not been received within a second predetermined period of time.

15. A computer program product (1308), comprising a computer program (1310), which when run in one or more processing units, causes the one or more processing units to implement the arrangement according to any one of the claims 9-14 or to perform the method according to any one of claims 1-8.

## Patentansprüche

1. Verfahren in einem Daten empfangenden Knoten in einem zellularen Kommunikationsnetzwerk, ferner umfassend einen Daten übertragenden Knoten und einen zwischenliegenden Knoten, wobei einer des Daten empfangenden Knotens und des Daten übertragenden Knotens ein mobiles Endgerät ist, das Verfahren umfassend:
wenn das mobile Endgerät gleichzeitig mit den anderen beiden Knoten assoziiert ist:
- Empfangen (702) von Daten von dem Daten übertragenden Knoten,
- Übertragen (706) einer etwaigen negativen Bestätigung, NACK, die zu den empfangenen Daten in Beziehung steht, direkt an den Daten übertragenden Knoten, und wobei das Verfahren **dadurch gekennzeichnet ist, dass** es ferner umfasst:
- Übertragen (708) einer etwaigen positiven Bestätigung, ACK, die zu den empfangenen Daten in Beziehung steht, an den zwischenliegenden Knoten für weitere Übertragung an den Daten übertragenden Knoten.

2. Verfahren nach Anspruch 1, wobei eine NACK im Vergleich mit der Robustheit beim Übertragen einer ACK mit einer höheren Robustheit übertragen wird.

3. Verfahren nach Anspruch 1 oder 2, wobei eine NACK im Vergleich mit der Robustheit beim Codieren einer ACK robuster codiert wird.

4. Verfahren nach einem der vorstehenden Ansprüche, wobei eine NACK im Vergleich mit der Leistung, die beim Übertragen einer ACK verwendet wird, mit einer höheren Leistung übertragen wird.

5. Verfahren nach einem der vorstehenden Ansprüche, wobei eine NACK basierend auf minimaler Verzögerung weitergeleitet wird, während eine ACK basierend auf minimaler Nutzung von Funkbetriebsmitteln weitergeleitet wird.

6. Verfahren in einem Daten übertragenden Knoten in einem zellularen Kommunikationsnetzwerk, ferner umfassend einen Daten empfangenden Knoten und einen zwischenliegenden Knoten, wobei einer des Daten empfangenden Knotens und des Daten übertragenden Knotens ein mobiles Endgerät ist, das Verfahren umfassend:
wenn das mobile Endgerät gleichzeitig mit den anderen beiden Knoten assoziiert ist:
- Übertragen (902) von Daten an den Daten empfangenden Knoten,
- Empfangen (904) einer etwaigen negativen Bestätigung, NACK, die zu den übertragenen Daten in Beziehung steht, direkt von dem Daten empfangenden Knoten, und
wobei das Verfahren **dadurch gekennzeichnet ist, dass** es ferner umfasst:
- Empfangen (904) einer etwaigen positiven Bestätigung, ACK, die zu den übertragenen Daten in Beziehung steht, von dem zwischenliegenden Knoten.

7. Verfahren nach Anspruch 6, wobei eine ACK angenommen wird, wenn keine NACK innerhalb einer ersten im Voraus bestimmten Zeitperiode empfangen wurde.

8. Verfahren nach Anspruch 6 oder 7, wobei eine Neuübertragung einer höheren Schicht ausgelöst wird, wenn eine erwartete ACK nicht innerhalb einer zweiten im Voraus bestimmten Zeitperiode empfangen wurde.

9. Anordnung (800) in einem Daten empfangenden Knoten (801) in einem zellularen Kommunikationsnetzwerk, ferner umfassend einen Daten übertragenden Knoten und einen zwischenliegenden Knoten, wobei einer des Daten empfangenden Knotens und des Daten übertragenden Knotens ein mobiles Endgerät ist, wobei das mobile Endgerät gleichzeitig mit den anderen beiden Knoten assoziiert ist, umfassend:
- eine Empfangseinheit (802), angepasst zum Empfangen von Daten von einem Daten übertragenden Knoten,
- eine Rückmeldungseinheit (804), angepasst zum Bestimmen, ob die Daten richtig empfangen wurden oder nicht, und angepasst zum Entscheiden, ob eine negative oder positive Bestätigung als Rückmeldung hinsichtlich von Einheiten der Daten zu kommunizieren ist, und
- eine Übertragungseinheit (806), angepasst zum Übertragen einer etwaigen negativen Bestätigung, NACK, die zu den empfangenen Daten in Beziehung steht, direkt an den Daten übertragenden Knoten, und
wobei die Anordnung **dadurch gekennzeichnet ist, dass** die Übertragungseinheit ferner angepasst ist zum Übertragen einer etwaigen positiven Bestätigung, die zu den empfangenen Daten in Beziehung steht, an den zwischenliegenden Knoten zur weiteren Übertragung an den Daten übertragenden Knoten.

10. Anordnung nach Anspruch 9, ferner angepasst zum Übertragen einer NACK, die zu den empfangenen Daten in Beziehung steht, mit einer höheren Robustheit im Vergleich mit der Robustheit beim Übertragen einer ACK, die zu den empfangenen Daten in Beziehung steht.

11. Anordnung nach Anspruch 9 oder 10, ferner angepasst zum Weiterleiten einer NACK basierend auf minimaler Verzögerung und zum Weiterleiten einer ACK basierend auf minimaler Nutzung von Steuerkanal-Betriebsmitteln.

12. Anordnung (1000) in einem Daten übertragenden Knoten (1001) in einem zellularen Kommunikationsnetzwerk, ferner umfassend einen Daten empfangenden Knoten und einen zwischenliegenden Knoten, wobei einer des Daten empfangenden Knotens und des Daten übertragenden Knotens ein mobiles Endgerät ist, wobei das mobile Endgerät gleichzeitig mit den anderen beiden Knoten assoziiert ist, umfassend:
- eine Übertragungseinheit (1006), angepasst zum Übertragen von Daten an einen Daten empfangenden Knoten, und
wobei die Anordnung **dadurch gekennzeichnet ist, dass** sie ferner umfasst:
- eine Empfangseinheit (1002), angepasst zum Empfangen einer etwaigen negativen Bestätigung, NACK, die zu den übertragenen Daten in Beziehung steht, direkt von dem Daten empfangenden Knoten, und
wobei die Anordnung **dadurch gekennzeichnet ist, dass** die Empfangseinheit ferner angepasst ist zum Empfangen einer etwaigen positiven Bestätigung, ACK, die zu den übertragenen Daten in Beziehung steht, von dem zwischenliegenden Knoten.

13. Anordnung nach Anspruch 12, ferner angepasst zum Annehmen einer ACK, wenn keine NACK innerhalb einer ersten im Voraus bestimmten Zeitperiode empfangen wird.

14. Anordnung nach Anspruch 12 oder 13, ferner angepasst zum Auslösen einer Neuübertragung einer höheren Schicht, wenn eine erwartete ACK nicht innerhalb einer zweiten im Voraus bestimmten Zeitperiode empfangen wurde.

15. Computerprogrammprodukt (1308), umfassend ein Computerprogramm (1310), das, wenn es in einer oder mehreren Verarbeitungseinheiten ausgeführt wird, bewirkt, dass die eine oder mehreren Verarbeitungseinheiten die Anordnung nach einem der Ansprüche 9-14 implementieren oder das Verfahren nach einem der Ansprüche 1-8 ausführen.

## Revendications

1. Procédé mis en oeuvre dans un noeud de réception de données au sein d'un réseau de communication cellulaire comprenant en outre un noeud de transmission de données et un noeud intermédiaire, dans lequel l'un parmi le noeud de réception de données et le noeud de transmission de données est un terminal mobile, le procédé consistant à :
lorsque le terminal mobile est simultanément associé aux deux autres noeuds :
- recevoir (702) des données en provenance du noeud de transmission de données ;
- transmettre (706) un quelconque accusé de réception négatif, NACK, connexe aux données reçues, directement au noeud de transmission de données ; et
le procédé étant **caractérisé en ce qu'**il consiste en outre à :
- transmettre (708) un quelconque accusé de réception positif, ACK, connexe aux données reçues, au noeud intermédiaire, en vue d'un transfert ultérieur au noeud de transmission de données.

2. Procédé selon la revendication 1, dans lequel un accusé NACK est transmis avec une robustesse supérieure à la robustesse rencontrée lors de la transmission d'un accusé ACK.

3. Procédé selon la revendication 1 ou 2, dans lequel la robustesse du codage d'un accusé NACK est supérieure à la robustesse du codage d'un accusé ACK.

4. Procédé selon l'une quelconque des revendications précédentes, dans lequel un accusé NACK est transmis avec une puissance supérieure à la puissance utilisée lors de la transmission d'un accusé ACK.

5. Procédé selon l'une quelconque des revendications précédentes, dans lequel un accusé NACK est acheminé sur la base d'un retard minimum, tandis qu'un accusé ACK est acheminé sur la base d'une utilisation minimale de ressources radio.

6. Procédé mis en oeuvre dans un noeud de transmission de données au sein d'un réseau de communication cellulaire comprenant en outre un noeud de réception de données et un noeud intermédiaire, dans lequel l'un parmi le noeud de réception de données et le noeud de transmission de données est un terminal mobile, le procédé consistant à :
lorsque le terminal mobile est simultanément associé aux deux autres noeuds :
- transmettre (902) des données au noeud de réception de données ;
- recevoir (904) un quelconque accusé de réception négatif, NACK, connexe aux données transmises, directement à partir du noeud de réception de données ; et
le procédé étant **caractérisé en ce qu'**il consiste en outre à :
- recevoir (904) un quelconque accusé de réception positif, ACK, connexe aux données transmises, à partir du noeud intermédiaire.

7. Procédé selon la revendication 6, dans lequel un accusé ACK est supposé lorsqu'aucun accusé NACK n'a été reçu au cours d'une première période de temps prédéterminée.

8. Procédé selon la revendication 6 ou 7, dans lequel une retransmission de couche supérieure est déclenchée lorsqu'un accusé ACK attendu n'a pas été reçu au cours d'une seconde période de temps prédéterminée.

9. Agencement (800) mis en oeuvre dans un noeud de réception de données (801) au sein d'un réseau de communication cellulaire comprenant en outre un noeud de transmission de données et un noeud intermédiaire, dans lequel l'un parmi le noeud de réception de données et le noeud de transmission de données est un terminal mobile, le terminal mobile étant simultanément associé aux deux autres noeuds, comprenant :
- une unité de réception (802), apte à recevoir des données en provenance d'un noeud de transmission de données ;
- une unité de rétroaction (804), apte à déterminer si les données ont été reçues correctement ou non, et apte à décider si un accusé de réception négatif ou un accusé de réception positif doit être communiqué sous la forme d'une rétroaction concernant des unités de données ; et
- une unité de transmission (806) apte à transmettre un quelconque accusé de réception négatif, NACK, connexe aux données reçues, directement au noeud de transmission de données ; et
l'agencement étant **caractérisé en ce que** l'unité de transmission est en outre apte à transmettre un quelconque accusé de réception positif, ACK, connexe aux données reçues, au noeud intermédiaire, en vue d'un transfert ultérieur au noeud de transmission de données.

10. Agencement selon la revendication 9, en outre apte à transmettre un accusé NACK connexe aux données reçues avec une robustesse supérieure à la robustesse rencontrée lors de la transmission d'un accusé ACK connexe aux données reçues.

11. Agencement selon la revendication 9 ou 10, en outre apte à acheminer un accusé NACK sur la base d'un retard minimum, et à acheminer un accusé ACK sur la base d'une utilisation minimale de ressources de canal de commande.

12. Agencement (1000) mis en oeuvre dans un noeud de transmission de données (1001) au sein d'un réseau de communication cellulaire comprenant en outre un noeud de réception de données et un noeud intermédiaire, dans lequel l'un parmi le noeud de réception de données et le noeud de transmission de données est un terminal mobile, le terminal mobile étant simultanément associé aux deux autres noeuds, comprenant :
- une unité de transmission (1006), apte à transmettre des données à un noeud de réception de données ; et
l'agencement étant **caractérisé en ce qu'**il comprend en outre :
- une unité de réception (1002), apte à recevoir un quelconque accusé de réception négatif, NACK, connexe aux données transmises, directement à partir du noeud de réception de données ; et
l'agencement étant **caractérisé en ce que** l'unité de réception est en outre apte à recevoir un quelconque accusé de réception positif, ACK, connexe aux données transmises, à partir du noeud intermédiaire.

13. Agencement selon la revendication 12, en outre apte à supposer un accusé ACK lorsqu'aucun accusé NACK n'est reçu au cours d'une première période de temps prédéterminée.

14. Agencement selon la revendication 12 ou 13, en outre apte à déclencher une retransmission de couche supérieure lorsqu'un accusé ACK attendu n'a pas été reçu au cours d'une seconde période de temps prédéterminée.

15. Produit-programme informatique (1308), comprenant un programme informatique (1310) qui, lorsqu'il est exécuté sur une ou plusieurs unités de traitement, amène ladite une ou lesdites plusieurs unités de traitement à mettre en oeuvre l'agencement selon l'une quelconque des revendications 9 à 14, ou à mettre en oeuvre le procédé selon l'une quelconque des revendications 1 à 8.
